# EUROPEAN PATENT APPLICATION

(11) **EP 4 822 940 A1**
(43) Date of publication of application: **14.10.2026**
(21) Application number: 24905587.2
(22) Date of filing: 14.08.2024
(51) Int. Cl.: H02J 7/00, H02J 7/10, H02M 3/335, H02M 7/797, B60L 53/22, B60L 1/00

(54) **ON-BOARD CHARGER REALIZING ADAPTIVE LOAD POWER ADJUSTMENT, CONTROL METHOD, AND ELECTRIC VEHICLE**

(30) Priority: 19.12.2023 CN 202311760854
(71) Applicant: Huawei Digital Power Technologies Co., Ltd., Shenzhen, Guangdong 518043 (CN)
(72) Inventor: CHANG, Liang, Shenzhen, Guangdong 518043 (CN); YAN, Chao, Shenzhen, Guangdong 518043 (CN); ZENG, Tao, Shenzhen, Guangdong 518043 (CN); LI, Wenda, Shenzhen, Guangdong 518043 (CN)
(74) Representative: Maiwald GmbH
(86) International application number: PCT/CN2024/112163
(87) International publication number: WO 2025/130092

(57) **Abstract**

An on-board charger with a load power adaptation function, a control method, and an electric vehicle are provided. The on-board charger (10) includes a power conversion circuit (11) and a control circuit (13). The power conversion circuit (11) is configured to receive a first direct current, and convert the first direct current into a first alternating current to supply power to a load (50). The control circuit (13) is configured to: in response to a current value of the first alternating current being greater than a preset current value, control the power conversion circuit (11) to be configured to reduce the current value of the first alternating current; or the control circuit (13) is configured to: in response to an output power of the power conversion circuit (11) being greater than a preset power value in a process in which the power conversion circuit (11) outputs the first alternating current, control the power conversion circuit (11) to be configured to reduce a current value of the first alternating current. In a process of supplying power to the outside, the on-board charger (10) can reduce an operating power of the load (50) when a power of the load (50) is excessively high, improving a load-carrying capability of the on-board charger (10).

## Description

This application claims priority to Chinese Patent Application No. 202311760854.5, filed with the China National Intellectual Property Administration on December 19, 2023 and entitled "ON-BOARD CHARGER WITH ADAPTIVE LOAD POWER ADJUSTMENT, CONTROL METHOD, AND ELECTRIC VEHICLE", which is incorporated herein by reference in its entirety.

### TECHNICAL FIELD

This application relates to the field of power supply and distribution for electric vehicles, and in particular, to an on-board charger with adaptive load power adjustment, a control method, and an electric vehicle.

### BACKGROUND

With continuous development of the electric vehicle industry, a bidirectional on-board charger has been developed. The bidirectional on-board charger has two functions: charging and power supply. The bidirectional on-board charger may receive an alternating current from an alternating current charging pile and convert the alternating current into a direct current to charge a power battery; and may also convert a direct current from the power battery into an alternating current to supply power to a load outside. In a process in which the bidirectional on-board charger supplies power to the outside, if an operating power of the load exceeds a preset power value, the on-board charger stops outputting because an output power or an output current exceeds a limit, which adversely affects user experience.

### SUMMARY

This application provides an on-board charger with an adaptive load power adjustment function, a control method, and an electric vehicle, to resolve a problem that an on-board charger stops outputting because an operating power of a load is excessively high in a process in which the on-board charger supplies power to the outside.

According to a first aspect, this application provides an on-board charger with an adaptive power adjustment function. The on-board charger includes a power conversion circuit and a control circuit. The power conversion circuit is configured to receive a first direct current and convert the first direct current into a first alternating current to supply power to a load; or the power conversion circuit is configured to receive a second alternating current and convert the second alternating current into a second direct current to charge a power battery.

The control circuit is configured to: in response to a current value of the first alternating current being greater than a preset current value, control the power conversion circuit to be configured to reduce the current value or a voltage value of the first alternating current; or the control circuit is configured to: in response to an output power of the power conversion circuit being greater than a preset power value in a process in which the power conversion circuit outputs the first alternating current, control the power conversion circuit to be configured to reduce a current value or a voltage value of the first alternating current.

The on-board charger provided in this application is a bidirectional on-board charger. To be specific, the on-board charger provided in this application may receive the second alternating current from an alternating current charging pile and convert the second alternating current into the second direct current to charge the power battery of an electric vehicle; and may also receive the first direct current from the power battery and convert the first direct current into the first alternating current to supply power to the outside.

In a process in which the on-board charger supplies power to the outside, if a power of the load is excessively high, an output power of the on-board charger exceeds a rated power; and the on-board charger stops outputting due to overload, which limits a power of the load that can be driven by the on-board charger. However, the on-board charger provided in this embodiment of this application can reduce the current value of the first alternating current when the output power is excessively high. According to Ohm's Law U=I*R, in an operating process, when the current value of the first alternating current output by the power conversion circuit decreases, the output power of the power conversion circuit (that is, the output power of the on-board charger) also decreases, and an operating voltage and an operating power of the load decrease accordingly. In this way, it is avoided that the output power or an output current of the on-board charger exceeds a limit. Generally, a voltage at which the load can operate normally is within a range between a minimum operating voltage and a maximum operating voltage. In other words, the load can still operate normally when a voltage of the load is moderately reduced.

The control circuit of the on-board charger provided in this application may also directly control the power conversion circuit to reduce the voltage value of the first alternating current when the current value of the first alternating current output by the power conversion circuit is excessively large or the output power is excessively high. In this way, the foregoing technical effects can also be achieved.

The preset current value may be a rated current value of the on-board charger; or may be a current value determined based on an output current limit of the on-board charger, for example, which may be 1.1 times or 0.9 times of a rated current value; or certainly may be a current value determined according to an actual operating requirement of the on-board charger. Similarly, the preset power value may be a rated output power of the on-board charger; or may be a power value determined based on an output power limit of the on-board charger; or certainly may be a power value determined according to an actual operating requirement of the on-board charger.

In conclusion, the on-board charger provided in this application may adaptively adjust a value of the output power in the process of supplying power to the outside, to prevent the on-board charger from being difficult to operate because the output power or the output current of the on-board charger exceeds the limit, thereby improving operating reliability of the on-board charger. In addition, the on-board charger provided in this application can improve a load-carrying capability when supplying power to the outside, thereby improving a capability of the on-board charger to supply power to the outside.

In an implementation of the first aspect, in a process in which the control circuit is configured to control the power conversion circuit to be configured to reduce the current value of the first alternating current, the voltage value of the first alternating current decreases as the current value of the first alternating current decreases.

In an implementation of the first aspect, in a process in which the control circuit is configured to control the power conversion circuit to be configured to reduce the current value of the first alternating current, the output power of the power conversion circuit decreases as the current value of the first alternating current decreases.

According to Ohm's Laws U=I*R and P= I²*R, where R is a load resistance, in the process in which the on-board charger supplies power to the outside, the load resistance remains basically unchanged; and after the current value I of the first alternating current decreases, the voltage value U of the first alternating current and the output power P of the power conversion circuit decrease accordingly.

In an implementation of the first aspect, in a process in which the control circuit controls the power conversion circuit to be configured to reduce the current value of the first alternating current, the control circuit is configured to: in response to the current value of the first alternating current being less than the preset current value and the voltage value of the first alternating current being less than a preset voltage value, control the power conversion circuit be configured to increase the voltage value of the first alternating current.

The preset voltage value herein may be the minimum operating voltage of the load, or may be a voltage value that is determined by the on-board charger based on an actual operating status and that can enable the on-board charger to normally supply power to the load to make the load operate normally. After the control circuit is configured to reduce the current value of the first alternating current to be less than a rated current, if the voltage value of the first alternating current is less than the minimum operating voltage of the load, the load is difficult to operate due to an extremely low voltage. In this case, the control circuit may be further configured to increase the voltage value of the first alternating current, to make the load operate.

In an implementation of the first aspect, in a process of controlling the power conversion circuit to be configured to reduce the current value of the first alternating current, the control circuit is configured to: in response to the current value of the first alternating current being greater than or equal to the preset current value and the voltage value of the first alternating current being less than or equal to the preset voltage value, control the power conversion circuit to stop outputting the first alternating current.

After the control circuit is configured to reduce the current value of the first alternating current, if the voltage value of the first alternating current is less than a value of the minimum operating voltage of the load and the current value of the first alternating current is still greater than the preset current value, the current value of the first alternating current is further increased if the voltage value of the first alternating current is increased, so that the output current of the on-board charger exceeds the limit. However, if the voltage value of the first alternating current is not increased, it is difficult for the load to operate. In this case, it indicates that the power of the load exceeds an output limit of the on-board charger, and the control circuit is configured to control the power conversion circuit to stop outputting the first alternating current, to ensure safety of the on-board charger.

In an implementation of the first aspect, in a process in which the power circuit is configured to output the first alternating current, the control circuit is configured to: in response to a rated power of the load being less than or equal to the preset power value, control the output power of the power conversion circuit to be equal to the rated power of the load; and the control circuit is configured to: in response to the rated power of the load being greater than the preset power value, control the power conversion circuit to be configured to reduce the voltage value or the current value of the first alternating current until an actual power of the load is less than or equal to the preset power value.

The on-board charger provided in this application may control the output power of the power conversion circuit based on a result of comparing the rated power of the load with the rated power of the on-board charger. If the rated power of the load is less than or equal to the preset power value, in other words, the rated power of the load is less than an output power limit of the on-board charger, the control circuit may control the output power of the power conversion circuit to be equal to the rated power of the load. However, if the rated power of the load is greater than the preset power value, to enable the on-board charger to operate normally, the control circuit is configured to control the power conversion circuit to be configured to reduce the voltage value or the current value of the first alternating current until the actual power of the load is less than or equal to the preset power value.

In an implementation of the first aspect, in a process in which the power circuit is configured to output the first alternating current, the control circuit is configured to: in response to the output power of the power conversion circuit increasing from being less than or equal to the preset power value to being greater than the preset power value, control the power conversion circuit to be configured to reduce the current value of the first alternating current until the output power of the power conversion circuit is less than or equal to the preset power value.

In an implementation of the first aspect, in a process in which the power conversion circuit is configured to output the first alternating current, the control circuit is configured to: in response to an output voltage of the power battery being less than a second preset voltage value, control the current value of the first alternating current output by the power conversion circuit to be less than a second preset current value.

The second preset voltage value herein is a voltage value corresponding to a relatively small remaining battery capacity of the power battery. For example, the second preset voltage value may be an output voltage of the power battery when SOC of the power battery is 20%, and the second preset current value is a current value that can support normal operating of the load. For example, the second preset current value may be a corresponding current value when the load operates at a rated voltage, or may be a current value determined based on an actual operating status of the on-board charger. The on-board charger provided in this application may limit a value of the output current of the power conversion circuit when the remaining battery capacity of the power battery is relatively small, and reduce the output power of the power conversion circuit, thereby reducing a power consumption speed of the power battery, saving energy of the power battery, and improving endurance of the entire vehicle.

In an implementation of the first aspect, the power conversion circuit includes a power factor correction circuit and a bidirectional direct current conversion circuit. The bidirectional direct current conversion circuit is configured to receive the first direct current and adjust a voltage of the first direct current. The power factor correction circuit is configured to convert a direct current from the bidirectional direct current conversion circuit into the first alternating current.

In an implementation of the first aspect, the on-board charger includes a second direct current conversion circuit, where the second direct current conversion circuit is configured to convert the first direct current into a third direct current, and a voltage of the third direct current is less than a voltage of a second direct current.

According to a second aspect, this application provides a load power adaptive control method for an on-board charger. The on-board charger includes a power conversion circuit, and the power conversion circuit is configured to receive a first direct current and convert the first direct current into a first alternating current to supply power to a load. The control method includes:
in response to a current value of the first alternating current being greater than a preset current value, controlling the power conversion circuit to be configured to reduce the current value or a voltage value of the first alternating current; or
in response to an output power of the power conversion circuit being greater than a preset power value in a process in which the power conversion circuit outputs the first alternating current, controlling the power conversion circuit to be configured to reduce a current value or a voltage value of the first alternating current.

In an implementation of the second aspect, the control method includes:
in response to the current value of the first alternating current being less than the preset current value and the voltage value of the first alternating current being less than a preset voltage value in a process of controlling the power conversion circuit to be configured to reduce the current value of the first alternating current, controlling the power conversion circuit to be configured to increase the voltage value of the first alternating current.

In an implementation of the second aspect, the control method includes:
in response to the current value of the first alternating current being greater than or equal to the preset current value and the voltage value of the first alternating current being less than or equal to the preset voltage value in a process in which the power conversion circuit is controlled to be configured to reduce the current value of the first alternating current, controlling the power conversion circuit to stop outputting the first alternating current.

Beneficial effects of the control method provided in this application are similar to beneficial effects of the on-board charger provided in the first aspect of this application. Details are not described herein again.

According to a third aspect, this application provides an electric vehicle, where the electric vehicle includes the on-board charger according to any one of the first aspect, the power battery, and a low-voltage load. The on-board charger is configured to receive a first direct current from the power battery, and output a first alternating current and a third direct current, where the third direct current is used to supply power to the low-voltage load.

Beneficial effects of the electric vehicle provided in this application are similar to beneficial effects of the on-board charger provided in the first aspect of this application. Details are not described herein again.

### BRIEF DESCRIPTION OF DRAWINGS

To describe the technical solutions in embodiments of this application more clearly, the following briefly describes the accompanying drawings for describing embodiments of this application.
FIG. 1 is a diagram of a structure of an electric vehicle according to an embodiment of this application;
FIG. 2 is a diagram of a structure of an on-board charger according to an embodiment of this application;
FIG. 3 is a diagram of another structure of an on-board charger according to an embodiment of this application;
FIG. 4 is a diagram of another structure of an on-board charger according to an embodiment of this application;
FIG. 5a and FIG. 5b are schematics of a circuit of an on-board charger according to an embodiment of this application;
FIG. 6 is another schematic of a circuit of an on-board charger according to an embodiment of this application;
FIG. 7 is a diagram of operating of an on-board charger;
FIG. 8 is a diagram of load parameters according to an embodiment of this application; and
FIG. 9 is another diagram of operating of an on-board charger according to an embodiment of this application.

### DESCRIPTION OF EMBODIMENTS

To better understand technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, "A and/or B" may represent the following three cases: Only A exists, both A and B exist, and only B exists. In addition, the character "/" in this specification generally indicates an "or" relationship between the associated objects.

It should be understood that in this application, "at least one (item)" means to one or more and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

Charging of a power battery in an electric vehicle is a key issue that determines performance and user experience of the electric vehicle. At present, a manner of charging the power battery in the electric vehicle mainly includes fast charging and slow charging Fast charging means that a direct current charging pile directly charges the power battery. Slow charging means that an alternating current (alternating current, AC) is directly provided to the electric vehicle. To be specific, an on-board charger (on-board charger, OBC) converts the alternating current into a direct current for charging the power battery. Specifically, a power factor correction (power factor correction, PFC) circuit and a direct current conversion circuit are disposed in the on-board charger. After the power factor correction circuit converts a provided alternating current into a direct current, the direct current conversion circuit converts the direct current from the power factor correction circuit into a high-voltage direct current to charge the power battery.

In a process of using the electric vehicle, a user often encounters a scenario in which the power battery of the electric vehicle needs to discharge to the outside. For example, when the user drives the car for camping, various loads such as an electric kettle, an oven, and a sound system may be used. A bidirectional on-board charger may meet a requirement of the user for discharging to the outside by using the power battery in the electric vehicle. In addition to converting the alternating current from the alternating current charging pile into the direct current to charge the power battery, the bidirectional on-board charger may receive power supplied by the power battery and convert a direct current output by the power battery into an alternating current to supply power to the outside.

However, in a process in which the on-board charger supplies power to the outside, if a power of the load is excessively high, an output power of the on-board charger exceeds a rated power and the on-board charger is overloaded. The on-board charger stops outputting due to overload, which limits a power of the load that can be driven by the on-board charger, and affects user experience. To resolve this problem, this application provides an on-board charger with an adaptive load-carrying capability and an electric vehicle.

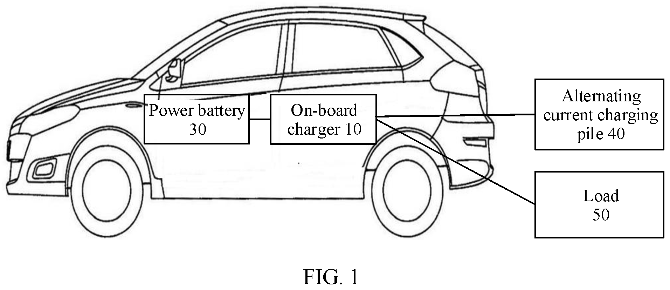

FIG. 1 is a diagram of a structure of an electric vehicle 01 according to an embodiment of this application. The electric vehicle 01 at least includes an on-board charger 10 and a power battery 30. When the on-board charger 10 is configured to charge the power battery 30, the on-board charger 10 is connected to an alternating current charging pile 40, and the on-board charger 10 converts a second alternating current from the alternating current charging pile 40 into a second direct current to charge the power battery 30. When the on-board charger 10 is configured to supply power to the outside, the on-board charger 10 is configured to connect to a load 50 outside the vehicle, and the on-board charger 10 is configured to convert a first direct current from the power battery 30 into a first alternating current for output, to supply power to the load 50.

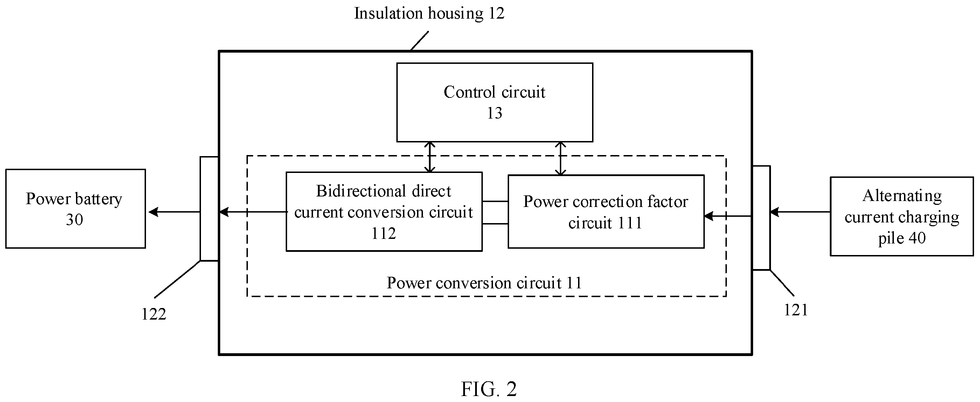

FIG. 2 is a diagram of a structure of the on-board charger 10. The on-board charger 10 includes a power conversion circuit 11 and an insulation housing 12, and the power conversion circuit 11 is accommodated in the insulation housing 12. The power conversion circuit 11 includes a power factor correction circuit 111 and a bidirectional direct current conversion circuit 112. The insulation housing 12 includes a power battery interface 122 and a power supply interface 121.

When the on-board charger 10 is configured to charge the power battery 30, the power supply interface 121 is configured to connect to a charging connector of the alternating current charging pile 40, and the power battery interface 122 is configured to connect to the power battery 30 of the electric vehicle 01. In this case, the power factor correction circuit 111 operates in a rectification mode. The power factor correction circuit 111 is configured to convert the second alternating current from the alternating current charging pile 40 into a direct current. The bidirectional direct current conversion circuit 112 adjusts a voltage of the direct current output by the power factor correction circuit 111 to output the second direct current to charge the power battery 30.

When the on-board charger 10 is configured to supply power to the outside, the power supply interface 121 is configured to connect to the load 50, the power battery interface 122 is configured to connect to the power battery 30, the bidirectional direct current conversion circuit 112 is configured to adjust a voltage of the first direct current from the power battery 30, the power factor correction circuit 111 operates in an inverter mode in this case, and the power factor correction circuit 111 is configured to convert the direct current output by the direct current conversion circuit into the first alternating current, where the first alternating current is used to supply power to the load 50.

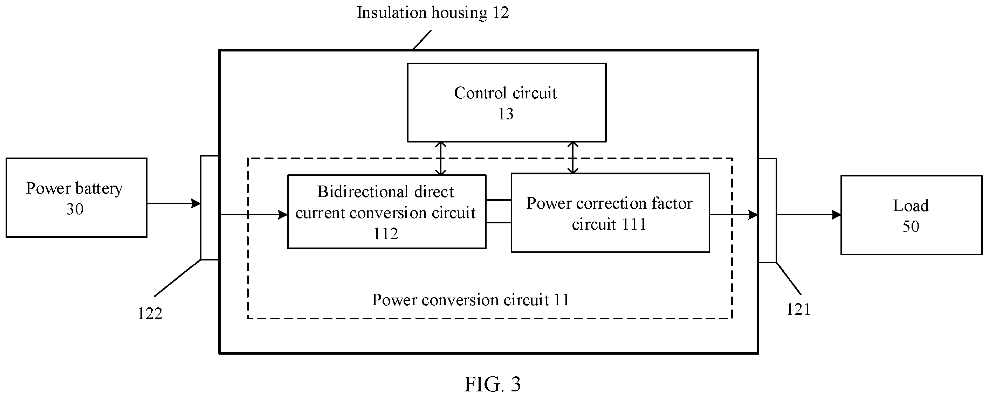

FIG. 2 is a diagram in which the on-board charger 10 converts the second alternating current from the alternating current charging pile 40 into the second direct current to charge the power battery 30 according to an embodiment of this application. FIG. 3 is a diagram in which the on-board charger 10 converts the first direct current from the power battery 30 into the first alternating current to supply power to the load 50 according to an embodiment of this application.

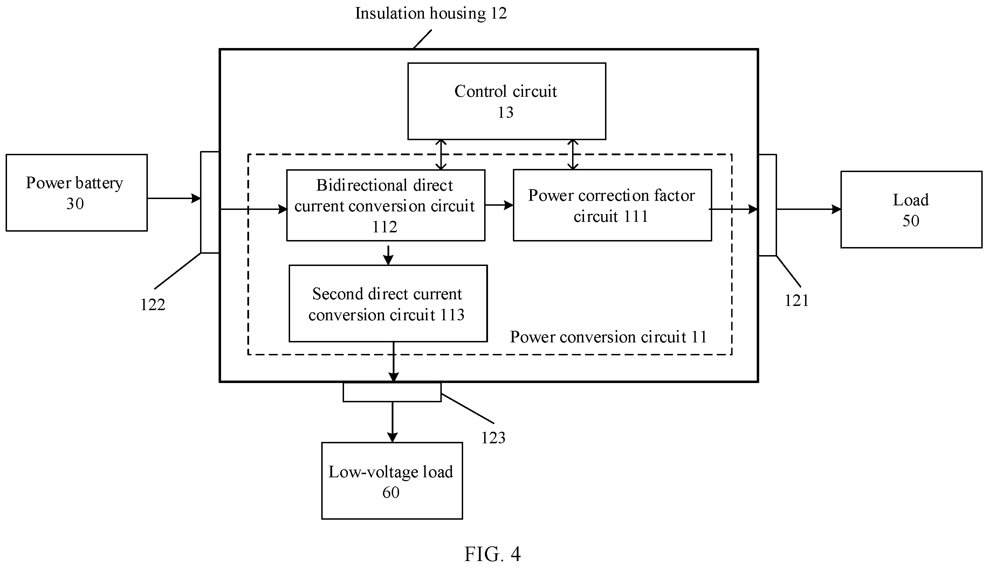

In an embodiment, as shown in FIG. 4, the on-board charger 10 may be further configured to supply power to a low-voltage load 60 in the electric vehicle 01. The power conversion circuit 11 includes a second direct current conversion circuit 113. The second direct current conversion circuit 113 is configured to receive the first direct current output by the bidirectional direct current conversion circuit 112, and convert the first direct current into a third direct current, where a voltage of the third direct current is lower than the voltage of the first direct current. The third direct current is used to supply power to the low-voltage load 50 on the electric vehicle 01. The low-voltage load 50 includes a low-voltage battery and another low-voltage electrical appliance, such as a windscreen wiper and an air conditioner compressor.

As shown in FIG. 2 to FIG. 4, the on-board charger 10 provided in this embodiment of this application further includes a control circuit 13, and the control circuit 13 is configured to control operating of the power conversion circuit 11.

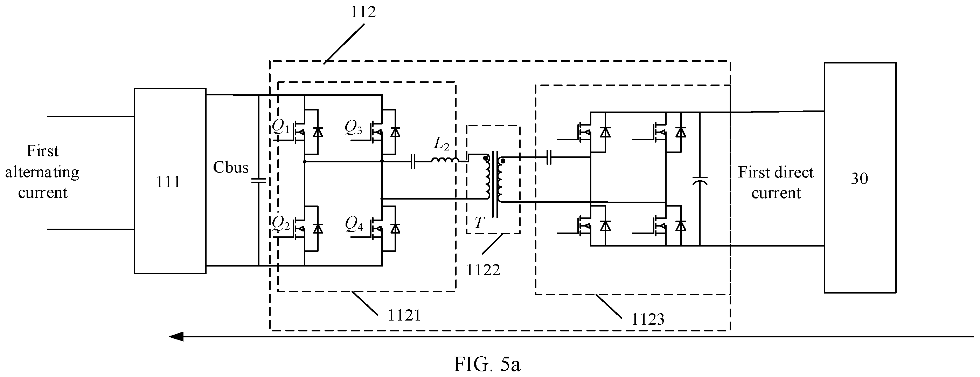

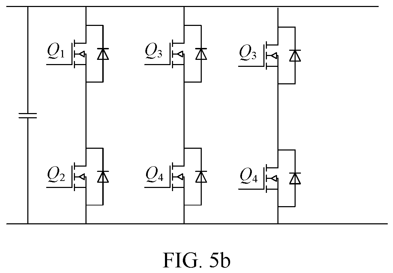

FIG. 5a and FIG. 5b are schematics of a circuit structure of the power conversion circuit 11 according to an embodiment of this application. The power factor correction circuit 111 is configured to perform alternating current-direct current conversion. The bidirectional direct current conversion circuit 112 is configured to perform direct current-direct current conversion to change a voltage of a direct current. As shown in FIG. 5a, the bidirectional direct current conversion circuit 112 includes a primary-side power circuit 1121, a transformer 1122, and a secondary-side power circuit 1123. When the on-board charger 10 is configured to supply power to the outside, the secondary-side power circuit 1123 of the bidirectional direct current conversion circuit 112 transfers electric energy to the primary-side power circuit 1121 via the transformer 1122. When the on-board charger 10 is configured to charge the power battery 30, the primary-side power circuit 1121 of the bidirectional direct current conversion circuit 112 transfers electric energy to the secondary-side power circuit 1123 via the transformer 1122.

FIG. 5b is a schematic of a specific circuit structure of the power factor correction circuit 111. An operating mode of the power factor correction circuit 111 includes a rectification mode and an inverter mode. When the power factor correction circuit 111 operates in the rectification mode, the power factor correction circuit 111 is configured to convert an alternating current into a direct current. To be specific, the power factor correction circuit 111 is configured to convert the second alternating current from the alternating current charging pile into the direct current. The bidirectional direct current conversion circuit 112 is configured to change the voltage of the direct current output by the power factor correction circuit 111, and finally output the second direct current to charge the power battery 30. When the power factor correction circuit 111 operates in the rectification mode, the power factor correction circuit 111 is configured to convert an alternating current into a direct current. To be specific, the bidirectional direct current conversion circuit 112 receives the first direct current output by the power battery 30 and reduces the voltage of the first direct current. The power factor correction circuit 111 receives the direct current from the bidirectional direct current conversion circuit 112 and converts the direct current into the first alternating current to supply power to the load 50.

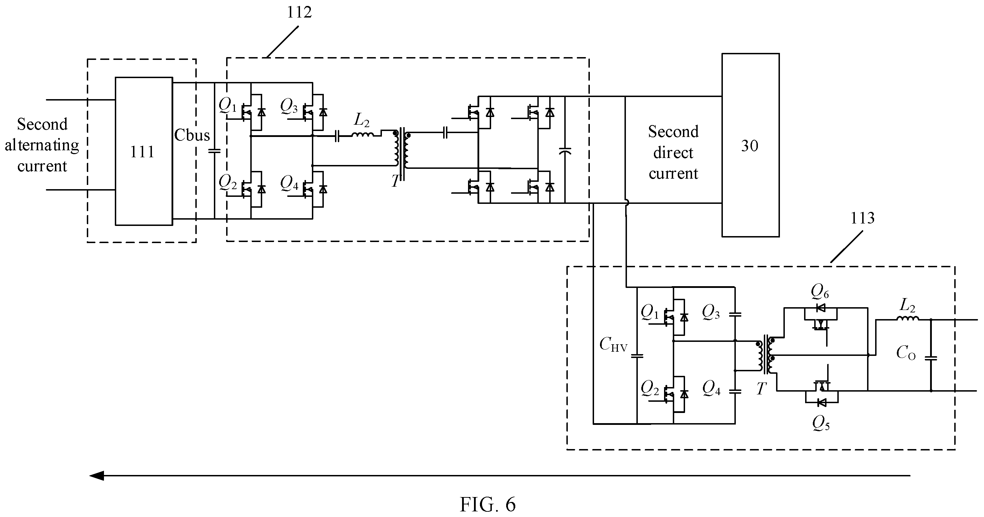

FIG. 6 is another diagram of an on-board charger 10 according to an embodiment of this application. As shown in FIG. 6, the on-board charger 10 further includes the second direct current conversion circuit 113. The second direct current conversion circuit 113 is configured to convert a second direct current output by the power battery 30 into a third direct current. A voltage of the third direct current is lower than a voltage of the second direct current, and the third direct current is used to supply power to the low-voltage load 50 on the electric vehicle 01. In an embodiment, a second power circuit may also receive the first direct current from the bidirectional direct current conversion circuit 112, and convert the first direct current into the third direct current to supply power to the low-voltage load 60 on the electric vehicle 01.

The on-board charger 10 shown in FIG. 6 is of a two-in-one design of the on-board charger 10 and an on-board DCDC converter. In other words, the on-board charger 10 shown in FIG. 6 integrates the on-board charger 10 and the on-board DCDC converter. The on-board charger 10 shown in FIG. 6 may charge the power battery 30, and may also supply power to the low-voltage electrical appliance in the electric vehicle 01 or charge the low-voltage battery.

It should be specially noted that, in a process in which the on-board charger 10 provided in this application supplies power to the outside, an output power of the on-board charger 10 is an output power of the power conversion circuit 11, the output power of the power conversion circuit 11 is a power of the first alternating current output by the power conversion circuit 11, and an output current of the on-board charger 10 is a current value of the first alternating current output by the power conversion circuit 11. A rated power of the on-board charger 10 is a power limit that can be normally output by the on-board charger 10, in other words, the output power of the on-board charger 10 cannot exceed the rated power for a long time. A rated current of the on-board charger 10 is a current limit that can be normally output by the on-board charger 10, in other words, the output current of the on-board charger 10 cannot exceed the rated current for a long time.

In the process in which the on-board charger 10 supplies power to the outside, if a power of the electrical appliance is excessively high, the output power of the on-board charger 10 exceeds the rated power and the on-board charger 10 is overloaded; and the on-board charger 10 stops outputting due to overload, which limits a power of the load 50 that can be driven by the on-board charger 10. However, the on-board charger 10 provided in this embodiment of this application may adaptively adjust an output voltage or current when the output power is excessively high, thereby improving a load-carrying capability of the on-board charger 10. With reference to specific embodiments, the following describes a specific process in which the on-board charger 10 adaptively adjusts the output voltage and the output current to improve the load-carrying capability of the on-board charger 10.

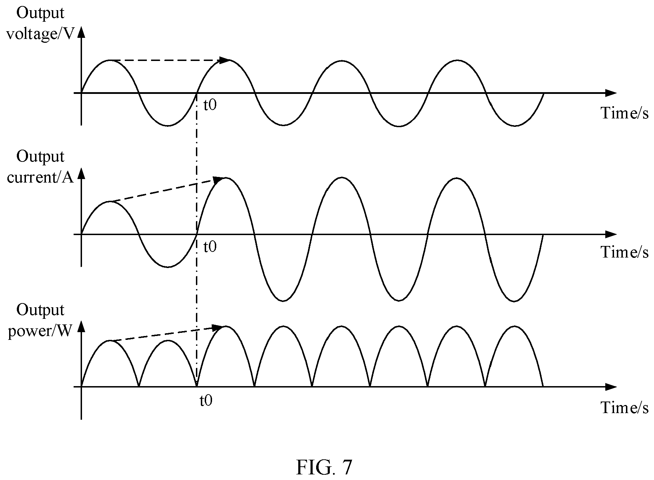

FIG. 7 is a diagram in which the power conversion circuit 11 outputs the first alternating current to the outside. As shown in FIG. 7, in a 0-t0 phase, the current value of the first alternating current is less than a rated output current of the on-board charger 10, a voltage value of the first alternating current is equal to a rated voltage (for example, 220 V) of the load 50, and the output power of the power conversion circuit 11 is less than a rated output power of the on-board charger 10. At a moment t0, an operating power of the load 50 increases, and the output power of the power conversion circuit 11 increases and exceeds the rated output power. Therefore, after the moment t0, the current value of the first alternating current is greater than the rated current, and the power of the first alternating current is greater than the rated power. As a result, the on-board charger 10 is overloaded and stops outputting. In addition, the excessively large output current and output power also damage a power component of the on-board charger 10, which affects safe and reliable operating of the on-board charger 10.

The on-board charger 10 provided in this embodiment of this application has a function of adaptively adjusting a power of the load 50. To be specific, the control circuit 13 is configured to: in response to the current value of the first alternating current being greater than a preset current value of the on-board charger 10, control the power conversion circuit 11 to be configured to reduce the current value or the voltage value of the first alternating current; or the control circuit 13 is configured to: in response to the output power of the power conversion circuit 11 being greater than a preset power value of the on-board charger 10 in a process in which the power conversion circuit 11 outputs the first alternating current, control the power conversion circuit 11 to be configured to reduce the current value or the voltage value of the first alternating current.

The preset current value may be a rated current value of the on-board charger 10; or may be a current value determined based on an output current limit of the on-board charger 10, for example, may be 1.1 times or 0.9 times of a rated current value; or certainly may be a current value determined according to an actual operating requirement of the on-board charger 10. Similarly, the preset power value may be the rated output power of the on-board charger; or may be a power value determined based on an output power limit of the on-board charger 10; or certainly may be a power value determined according to an actual operating requirement of the on-board charger 10.

The on-board charger 10 provided in this application is a bidirectional on-board charger 10. To be specific, the on-board charger 10 provided in this application may receive the second alternating current from the alternating current charging pile 40 and convert the second alternating current into the second direct current to charge the power battery 30 of the electric vehicle 01, and may also receive the first direct current from the power battery 30 and convert the first direct current into the first alternating current to supply power to the outside. In the process in which the on-board charger 10 supplies power to the outside, if the power of the load 50 is excessively high, the output power of the on-board charger 10 exceeds the rated power; and the on-board charger 10 stops outputting due to overload, which limits the power of the load 50 that can be driven by the on-board charger 10. However, the on-board charger 10 provided in this embodiment of this application may reduce the current value of the first alternating current when the output power is excessively high. According to Ohm's Law U=I*R, in an operating process, when the current value of the first alternating current output by the power conversion circuit 11 decreases, an operating voltage and the operating power of the load 50 decrease accordingly, so that the output power of the on-board charger 10 also decreases. In this way, this prevents the output power or the output current of the on-board charger 10 from exceeding a limit. Generally, a voltage at which the load 50 can operate normally is within a range between a minimum operating voltage and a maximum operating voltage. In other words, in an operating process of the load 50, the load 50 can still operate normally when a voltage of the load 50 is moderately reduced. In conclusion, the on-board charger 10 provided in this application may adaptively adjust a value of the output power in the process of supplying power to the outside, to prevent the on-board charger 10 from being difficult to operate because the output power or the output current of the on-board charger 10 exceeds the limit, thereby improving operating reliability of the on-board charger 10. In addition, the on-board charger 10 provided in this application can improve the load-carrying capability when supplying power to the outside, thereby improving a capability of the on-board charger 10 to supply power to the outside.

The control circuit 13 of the on-board charger 10 provided in this application may also directly control the power conversion circuit to reduce the voltage value of the first alternating current when the current value of the first alternating current output by the power conversion circuit 11 is excessively large or the output power is excessively high. In this way, the foregoing technical effects can also be achieved.

The following describes this process with reference to a specific example.

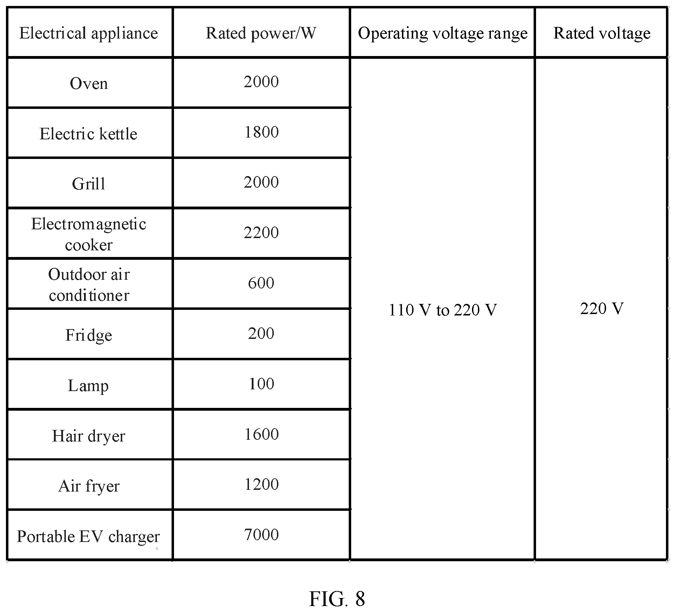

For example, the rated output power of the on-board charger 10 provided in this embodiment of this application is 6 kW, a rated output voltage is 220 V, and the rated current is 27.27 A. FIG. 8 shows rated powers, operating voltage ranges, and rated voltages of common electrical appliances. It is assumed that in the 0-t0 time period, only an oven and an electric kettle operate, the output voltage of the on-board charger 10 is 220 V, the output power is 2800 W, and the output current is 12.72 A. In this case, the on-board charger 10 can operate normally. At the moment t0, it is assumed that the oven, the electric kettle, a grill, an electromagnetic oven, and an outdoor air conditioner all operate. A rated power of the load 50 increases to 8 kW, and the output power of the on-board charger 10 changes to 8 kW accordingly. If the voltage value of the first alternating current is still 220 V, the current value of the first alternating current is 36.36 A. That is, in this case, both the output power and the output current of the on-board charger 10 exceed the limits, which affects safe and reliable operating of the on-board charger 10.

For the on-board charger 10 provided in this embodiment of this application, when the output power of the on-board charger 10 changes to 8 kW, which exceeds the rated output power of the on-board charger 10, the control circuit 13 controls the power conversion circuit 11 to reduce the current value of the first alternating current. For example, the control circuit 13 controls the power conversion circuit 11 to reduce the current value of the first alternating current to 30 A, and a resistance value of the load 50 is 220²/8000=6.05 ohms. After the current value of the first alternating current changes to 30 A, the operating voltage of the load 50 changes to 181.5 V, the operating power of the load 50 changes to 5445 W, and the output power of the on-board charger 10 is also 5445 W. In other words, after the current value of the first alternating current is reduced to 30 A, both the output current and the output power of the on-board charger 10 are reduced to the rated values, and the on-board charger 10 can operate normally. Because 181.5 V is within the operating voltage range of the load 50, the load 50 can still operate normally.

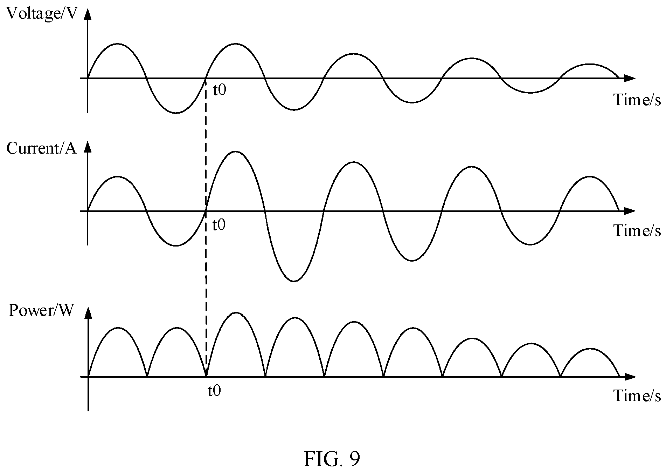

FIG. 9 is a diagram of a process in which the on-board charger 10 adaptively adjusts the power of the load 50 in the process of supplying power to the outside according to an embodiment of this application. As shown in FIG. 9, at the moment t0, the output power of the on-board charger 10 suddenly increases, and the output current increases accordingly. Then, the control circuit 13 controls the power conversion circuit 11 to be configured to reduce the current value of the first alternating current, and the voltage value of the first alternating current and the output power of the power conversion circuit 11 also decrease as the current value of the first alternating current decreases.

In an embodiment, the control circuit 13 may also be configured to: in response to the current value of the first alternating current being greater than the preset current value or the output power of the power conversion circuit 11 being greater than the preset power value, control the power conversion circuit 11 to be configured to directly reduce the voltage value of the first alternating current. A specific process is similar to a process in which the control circuit 13 is configured to control the power conversion circuit 11 to be configured to directly reduce the current value of the first alternating current, and details are not described herein again.

In an embodiment, in a process in which the control circuit 13 is configured to control the power conversion circuit 11 to be configured to reduce the current value of the first alternating current, the voltage value of the first alternating current decreases as the current value of the first alternating current decreases.

In an embodiment, in a process in which the control circuit 13 is configured to control the power conversion circuit 11 to be configured to reduce the current value of the first alternating current, the output power of the power conversion circuit 11 decreases as the current value of the first alternating current decreases.

According to Ohm's Laws U=I*R and P=I²*R, where R is the resistance value of the load 50, and the resistance value of the load 50 changes slightly in an operating process, after the current value I of the first alternating current decreases, the voltage value U of the first alternating current and the output power P of the power conversion circuit 11 decrease accordingly.

In an embodiment, in a process in which the control circuit 13 controls the power conversion circuit 11 to be configured to reduce the current value of the first alternating current, the control circuit 13 is configured to: in response to the current value of the first alternating current being less than the rated output current and the voltage value of the first alternating current being less than a preset voltage value, control the power conversion circuit 11 to be configured to increase the voltage value of the first alternating current.

After the control circuit 13 is configured to reduce the current value of the first alternating current to be less than the rated current, if the voltage value of the first alternating current is less than the minimum operating voltage of the load 50, the load 50 is difficult to operate due to an extremely low voltage. In this case, the control circuit 13 may be further configured to increase the voltage value of the first alternating current, to make the load 50 operate.

The preset voltage value herein may be the minimum operating voltage of the load 50, or may be a voltage value that is determined by the on-board charger based on an actual operating status and that can enable the on-board charger 10 to normally supply power to the load 50 to make the load 50 operate normally. After the control circuit 13 is configured to reduce the current value of the first alternating current to be less than the rated current, if the voltage value of the first alternating current is less than the minimum operating voltage of the load, the load 50 is difficult to operate due to the extremely low voltage. In this case, the control circuit may be further configured to increase the voltage value of the first alternating current, to make the load 50 operate.

For example, the rated output power of the on-board charger 10 is 6 kW, the rated output voltage is 220 V, and the rated current is 30 A. If the rated power of the load 50 is 25 kW, a resistance of the load 50 is 1.936 ohms. In this case, if the output power of the on-board charger 10 is reduced to the rated output power, the operating voltage of the load 50 is 107.8 V, which is less than the minimum operating voltage of the load 50. In other words, the on-board charger 10 cannot make the load 50 operate normally when the output power does not exceed the limit. In this case, the control circuit 13 controls the power conversion circuit 11 to stop outputting the first alternating current to protect the on-board charger 10.

In an embodiment, in the process of controlling the power conversion circuit 11 to be configured to reduce the current value of the first alternating current, the control circuit 13 is configured to: in response to the current value of the first alternating current being greater than or equal to the rated output current and the voltage value of the first alternating current being less than or equal to the preset voltage value, control the power conversion circuit 11 to stop outputting the first alternating current.

After the control circuit 13 is configured to reduce the current value of the first alternating current, if the voltage value of the first alternating current is less than the operating voltage of the load 50 and the current value of the first alternating current is still greater than the rated output current of the on-board charger 10, the current value of the first alternating current is further increased if the voltage value of the first alternating current is increased, so that the output current of the on-board charger 10 exceeds the limit. If the voltage value of the first alternating current is not increased, the load 50 is difficult to operate. In this case, it indicates that the power of the load 50 exceeds an output limit of the on-board charger 10, and the control circuit 13 is configured to control the power conversion circuit 11 to stop outputting the first alternating current, to ensure safety of the on-board charger 10.

In an embodiment, in a process in which the power circuit is configured to output the first alternating current, the control circuit 13 is configured to: in response to the rated power of the load 50 being less than or equal to the rated output power of the on-board charger 10, control the output power of the power conversion circuit 11 to be equal to the rated power of the load 50. The control circuit 13 is configured to: in response to the rated power of the load 50 being greater than the rated output power of the on-board charger 10, control the power conversion circuit 11 to be configured to reduce the voltage value of the first alternating current until an actual power of the load 50 is less than or equal to the rated output power of the on-board charger 10.

In an embodiment, in a process in which the power circuit is configured to output the first alternating current, the control circuit 13 is configured to: in response to the output power of the power conversion circuit 11 increasing from being less than or equal to the rated output power of the on-board charger 10 to being greater than the rated output power of the on-board charger 10, control the power conversion circuit 11 to be configured to reduce the current value of the first alternating current until the output power of the power conversion circuit 11 is less than or equal to the rated output power of the on-board charger 10.

In an embodiment, in a process in which the power conversion circuit 11 is configured to output the first alternating current, the control circuit 13 is configured to: in response to an output voltage of the power battery 30 being less than a second preset voltage value, control the current value of the first alternating current output by the power conversion circuit 11 to be less than a second preset current value.

The second preset voltage value herein is a voltage value corresponding to a relatively small remaining battery capacity of the power battery 30. For example, the second preset voltage value may be an output voltage of the power battery when SOC of the power battery is 20%, and the second preset current value is a current value that can support normal operating of the load. For example, the second preset current value may be a corresponding current value when the load operates at the rated voltage, or may be a current value determined based on an actual operating status of the on-board charger. The on-board charger 10 provided in this application may limit a value of the output current of the power conversion circuit 11 when the remaining battery capacity of the power battery 30 is relatively small, and reduce the output power of the power conversion circuit 11, thereby reducing a power consumption speed of the power battery, saving energy of the power battery 30, and improving endurance of the entire vehicle.

In an embodiment, in a process in which the power conversion circuit 11 is configured to output the first alternating current, the control circuit 13 is configured to: in response to a state of charge of the power battery 30 being less than a preset state of charge, control the current value of the first alternating current output by the power conversion circuit 11 to be less than the preset current.

In the process in which the on-board charger 10 supplies power to the outside, an energy source is the power battery 30 of the electric vehicle 01. If the output voltage or the state of charge of the power battery 30 is relatively small, it indicates that the remaining battery capacity of the power battery 30 is relatively small. In this case, to save electric energy of the power battery 30, the on-board charger 10 actively reduces the output current in the process of supplying power to the outside, thereby reducing the output power to reduce energy consumption.

For example, the rated output power of the on-board charger 10 is 6 kW, the rated output voltage is 220 V, and the rated current is 30 A. If the state of charge of the power battery 30 is less than or equal to 0.3, the output current of the on-board charger 10 is limited to be less than or equal to 20 A on a premise that the load 50 can operate normally.

Based on the foregoing on-board charger 10, an embodiment of this application further provides a control method that is applied to the on-board charger 10 and that has a function of adaptively adjusting the power of the load 50. The control method includes:
in response to a current value of a first alternating current being greater than a preset current value, controlling a power conversion circuit 11 to be configured to reduce the current value or a voltage value of the first alternating current; or
in response to an output power of a power conversion circuit 11 being greater than a preset power value in a process in which the power conversion circuit 11 outputs a first alternating current, controlling the power conversion circuit 11 to be configured to reduce a current value or a voltage value of the first alternating current.

The control method provided in this embodiment of this application that is applied to the on-board charger 10 and that has the function of adaptively adjusting the power of the load 50 may adaptively adjust a value of an output power in a process in which the on-board charger 10 supplies power to the outside, to prevent the on-board charger 10 from being difficult to operate because the output power or an output current of the on-board charger 10 exceeds a limit, thereby improving operating reliability of the on-board charger 10. In addition, the control method provided in this application can improve a load-carrying capability when the on-board charger 10 supplies power to the outside, thereby improving a capability of the on-board charger 10 to supply power to the outside.

In an embodiment, the control method includes:
in response to the current value of the first alternating current being less than the preset current value and the voltage value of the first alternating current being less than a preset voltage value in a process of controlling the power conversion circuit 11 to be configured to reduce the current value of the first alternating current, controlling the power conversion circuit 11 to be configured to increase the voltage value of the first alternating current.

After the control circuit 13 is configured to reduce the current value of the first alternating current to be less than a rated current, if the voltage value of the first alternating current is less than a minimum operating voltage of the load 50, the load 50 is difficult to operate due to an extremely low voltage. In this case, the control circuit 13 may be further configured to increase the voltage value of the first alternating current, to make the load 50 operate.

In an embodiment, the control method includes:
in response to the current value of the first alternating current being greater than or equal to the preset current value and the voltage value of the first alternating current being less than or equal to the preset voltage value in a process in which the power conversion circuit 11 is controlled to be configured to reduce the current value of the first alternating current, controlling the power conversion circuit 11 to stop outputting the first alternating current.

After the current value of the first alternating current is reduced, if the voltage value of the first alternating current is less than an operating voltage of the load 50, and the current value of the first alternating current is still greater than a rated output current of the on-board charger 10, the current value of the first alternating current is further increased if the voltage value of the first alternating current is increased, which makes the output current of the on-board charger 10 exceed the limit. However, if the voltage value of the first alternating current is not increased, the load 50 is difficult to operate. In this case, it indicates that a power of the load 50 exceeds an output limit of the on-board charger 10, and the control method provided in this embodiment of this application controls the power conversion circuit 11 to stop outputting the first alternating current, to ensure safety of the on-board charger 10.

A person of ordinary skill in the art may understand that various numbers such as first and second in this application are merely used for differentiation for ease of description, and are not used to limit the scope of embodiments of this application or a sequence. The execution sequence of processes should be determined by functions and internal logic of the processes.

A person of ordinary skill in the art may be aware that, in combination with the examples described in embodiments disclosed in this specification, modules may be implemented through electronic hardware or a combination of computer software and electronic hardware. Whether the functions are performed through hardware or software depends on particular applications and design constraint conditions of the technical solutions. A person skilled in the art may use different methods to implement the described functions for each particular application, but it should not be considered that the implementation goes beyond the scope of this application.

## Claims

1. An on-board charger, wherein the on-board charger comprises a power conversion circuit and a control circuit;
the power conversion circuit is configured to: receive a first direct current, and convert the first direct current into a first alternating current to supply power to a load; and
the control circuit is configured to:
in response to a current value of the first alternating current being greater than a preset current value, control the power conversion circuit to reduce the current value or a voltage value of the first alternating current; or
in response to an output power of the power conversion circuit being greater than a preset power value in a process in which the power conversion circuit outputs the first alternating current, control the power conversion circuit to be configured to reduce a current value or a voltage value of the first alternating current.

2. The on-board charger according to claim 1, wherein in a process in which the control circuit is configured to control the power conversion circuit to be configured to reduce the current value of the first alternating current, the voltage value of the first alternating current decreases as the current value of the first alternating current decreases.

3. The on-board charger according to claim 1, wherein in a process in which the control circuit is configured to control the power conversion circuit to be configured to reduce the current value of the first alternating current, the output power of the power conversion circuit decreases as the current value of the first alternating current decreases.

4. The on-board charger according to claim 1, wherein in a process of controlling the power conversion circuit to be configured to reduce the current value of the first alternating current, the control circuit is configured to:
in response to the current value of the first alternating current being less than the preset current value and the voltage value of the first alternating current being less than a preset voltage value, control the power conversion circuit to be configured to increase the voltage value of the first alternating current.

5. The on-board charger according to claim 4, wherein in the process of controlling the power conversion circuit to be configured to reduce the current value of the first alternating current, the control circuit is configured to:
in response to the current value of the first alternating current being greater than or equal to the preset current value and the voltage value of the first alternating current being less than or equal to the preset voltage value, control the power conversion circuit to stop outputting the first alternating current.

6. The on-board charger according to claim 1, wherein in a process in which the power conversion circuit is configured to output the first alternating current, the control circuit is configured to:
in response to a rated power of the load being less than or equal to the preset power value, control the output power of the power conversion circuit to be equal to the rated power of the load; and
in response to the rated power of the load being greater than the preset power value, control the power conversion circuit to be configured to reduce the voltage value of the first alternating current until an actual power of the load is less than or equal to the preset power value.

7. The on-board charger according to claim 1, wherein in a process in which the power conversion circuit is configured to output the first alternating current, the control circuit is configured to:
in response to the output power of the power conversion circuit increasing from being less than or equal to the preset power value to being greater than the preset power value, control the power conversion circuit to be configured to reduce the current value of the first alternating current until the output power of the power conversion circuit is less than or equal to the preset power value.

8. The on-board charger according to claim 1, wherein in a process in which the power conversion circuit is configured to output the first alternating current, the control circuit is configured to:
in response to an output voltage of a power battery being less than a second preset voltage value, control the current value of the first alternating current output by the power conversion circuit to be less than a second preset current value.

9. The on-board charger according to claim 1, wherein the power conversion circuit is configured to receive a second alternating current and convert the second alternating current into a second direct current to charge a power battery.

10. The on-board charger according to claim 1, wherein the power conversion circuit comprises a power factor correction circuit and a bidirectional direct current conversion circuit; and
the bidirectional direct current conversion circuit is configured to receive the first direct current and adjust a voltage of the first direct current, and the power factor correction circuit is configured to convert a direct current from the bidirectional direct current conversion circuit into the first alternating current.

11. The on-board charger according to claim 1, wherein the on-board charger comprises a second direct current conversion circuit, the second direct current conversion circuit is configured to convert the first direct current into a third direct current, and a voltage of the third direct current is less than a voltage of a second direct current.

12. A load power adaptive control method for an on-board charger, wherein the on-board charger comprises a power conversion circuit, and the power conversion circuit is configured to receive a first direct current and convert the first direct current into a first alternating current to supply power to a load; and the control method comprises:
in response to a current value of the first alternating current being greater than a preset current value, controlling the power conversion circuit to be configured to reduce the current value or a voltage value of the first alternating current; or
in response to an output power of the power conversion circuit being greater than a preset power value in a process in which the power conversion circuit outputs the first alternating current, controlling the power conversion circuit to be configured to reduce a current value or a voltage value of the first alternating current.

13. The control method according to claim 12, wherein the control method comprises:
in response to the current value of the first alternating current being less than the preset current value and the voltage value of the first alternating current being less than a preset voltage value in a process of controlling the power conversion circuit to be configured to reduce the current value of the first alternating current, controlling the power conversion circuit to be configured to increase the voltage value of the first alternating current.

14. The control method according to claim 13, wherein the control method comprises:
in response to the current value of the first alternating current being greater than or equal to the preset current value and the voltage value of the first alternating current being less than or equal to the preset voltage value in the process of controlling the power conversion circuit to be configured to reduce the current value of the first alternating current, controlling the power conversion circuit to stop outputting the first alternating current.

15. An electric vehicle, wherein the electric vehicle comprises the on-board charger according to claim 11, the power battery, and a low-voltage load; and
the on-board charger is configured to receive a first direct current from the power battery, and output a first alternating current and a third direct current, and the third direct current is used to supply power to the low-voltage load.
